# EUROPEAN PATENT APPLICATION

(11) **EP 2 926 952 A1**
(43) Date of publication of application: **07.10.2015**
(21) Application number: 13858471.9
(22) Date of filing: 25.11.2013
(51) Int. Cl.: B25B 21/02, B25F 5/00

(54) **IMPACT TOOL**

(30) Priority: 29.11.2012 JP 2012261771
(71) Applicant: Hitachi Koki Co., Ltd., Tokyo 108-6020 (JP)
(72) Inventor: TAKANO, Nobuhiro, Hitachinaka-City Ibaraki 312-8502 (JP); NISHIKAWA, Tomomasa, Hitachinaka-shi Ibaraki 312-8502 (JP); IWATA, Kazutaka, Hitachinaka-City Ibaraki 312-8502 (JP); HOSHI, Yoshihiro, Tokyo 108-6020 (JP)
(74) Representative: Parker, Andrew James
(86) International application number: PCT/JP2013/081607
(87) International publication number: WO 2014/084158

(57) **Abstract**

The purpose of the present invention is to provide an impact tool capable of performing high torque fastening operation by driving a motor efficiently while limiting temperature increase. An impact tool with a control means for controlling the driving power supplied to a motor using semiconductor switching elements and an impact mechanism for continuously or intermittently driving a tip tool using the rotational force of the motor, wherein during a single operation (period t0 - t9) from when an operator pulls a trigger until release of same, the control means varies the PWM drive signal for driving the semiconductor switching elements to perform control so as to intermittently manifest high duty impacts (62a, 63a ...) resulting from high duty ratio (100%) control between low duty impacts (62b, 62c, 63b, 63c ...) resulting from low duty ratio (80%) control. The control means monitors the motor electric current (80) and when a threshold (11) is exceeded, makes the duty ratio 100% and when a threshold (I2) is subsequently exceeded two times, switches the duty ratio to (80%).

## Description

### Technical Field

The present invention relates to an impact tool and, more particularly, to an impact tool with an improved control method of a motor which is used as a driving source.

### Background Art

A hand-held impact tool, particularly, a cordless type impact tool which is driven with electric energy stored in a battery, is widely used. In an impact tool that performs necessary operations by rotationally driving a tip tool such as a drill or a driver using a motor, a brushless DC motor is driven using a battery, for example, as disclosed in Japanese Laid-Open Patent Publication No. 2008-278633. A brushless DC motor is a DC (Direct Current) motor without a brush (brush for rectification). In a brushless DC motor, a coil (winding) is used for a rotor side, a permanent magnet is used for a stator side, and power driven by an inverter is sequentially supplied to predetermined coils to rotate a rotor. A brushless motor has higher efficiency than a brushed motor and can improve an operation time for each charging in an impact tool using a rechargeable secondary battery. Since a circuit having a switching element for rotationally driving a motor is provided, it is easy to perform advanced rotation control of the motor by electronic control.

A brushless DC motor includes a rotor having a permanent magnet, a stator having armature windings (stator windings) of plural phases such as three-phase windings, position detecting elements having plural of hall ICs for detecting a rotor position by detecting a magnetic force of the permanent magnet of the rotor, and an inverter circuit switching a DC voltage supplied from a battery pack or the like using a semiconductor switching element such as a field effect transistor (FET) or an insulated gate bipolar transistor (IGBT) to switch the supply of power to the stator windings of the respective phases to drive the rotor. The plural position detecting elements correspond to the armature windings of plural phases, and power supply timings of the armature windings of the respective phases are set based on the position detection result of the rotor from the position detecting elements.

### Prior Art

### Patent Literature

Patent Literature 1: JP2008-278633A

### SUMMARY OF THE INVENTION

### Problem To Be Solved By the Invention

The stator or the switching elements generate heat with the use of the impact tool. Operating temperature conditions are defined for the elements of the brushless DC motor. Accordingly, it is important to cause the stator or the switching elements to operate within the ranges of the conditions. In the impact tool, a temperature rise may occur in a motor body, a semiconductor switching element of a driving circuit fixed to the motor body, or the like by continuous operations or overload and thus may cause thermal damage to the components or the elements thereof. In order to solve this problem, it is preferable that an operator cool a motor unit by suppressing the rotation speed of the motor or stopping the motor before thermal damage occurs, but a fastening operation or a cutting operation has to be stopped for this cooling, which causes a decrease in work efficiency. It is difficult for an operator to determine whether the temperature of the motor unit abnormally rises.

The invention is made in consideration of the above-mentioned circumstances and an object thereof is to provide an impact tool which can efficiently drive a motor while suppressing a temperature rise and perform a high-torque fastening operation.

Another object of the invention is to provide an impact tool which can improve the number of operations using a single rechargeable battery by adjusting driving power of a motor without decreasing a fastening torque.

### Means for Solving the Problem

Still another object of the invention is to provide an impact tool which can extend a lifespan of a motor when the motor having a small size and capable of generating high power is used.

Representative features of the invention will be described below.

According to a feature of the invention, there is provided an impact tool including: a motor; control means for controlling driving power supplied to the motor using a semiconductor switching element; and a striking mechanism that continuously or intermittently drives a tip tool using a rotational force of the motor, wherein the control means drives the motor by changing a PWM driving signal for driving the semiconductor switching element to mix a high-duty strike based on control of a high duty ratio and a low-duty strike based on control of a low duty ratio in one operation until a finger is released after a finger trigger is pulled. The control means may perform control so as to cause the high-duty strike to intennittently appear between the low-duty strikes. When a brushless motor is used as the motor, an inverter circuit supplying driving power to the brushless motor may be provided and the control means may control the inverter circuit. When a brushed DC motor is used as the motor, a semiconductor switching element may be interposed in between a connection circuit connecting a battery to the motor and the control means may control the semiconductor switching element in a PWM control manner.

According to other features of the invention, the impact tool may further include strike detecting means for detecting a strike of the striking mechanism, and the control means may switch the duty ratio to the high duty ratio or the low duty ratio based on a timing of the detected strike. The strike detecting means may detect whether a strike is made by detecting a current value flowing in the motor or the semiconductor switching element or the strike detecting means may be an acceleration sensor. For example, the control means may change the PWM driving signal so as to cause the high-duty strike to appear once (or two or three times) for every two or more times in which the low-duty strike appears. It is preferable that the low duty ratio be equal to or less than 90% of the high duty ratio. It is more preferable that the low duty ratio range from 50% to 80% of the high duty ratio.

### Effect of the Invention

According to the configuration of claim 1, the control means changes the PWM driving signal for driving the semiconductor switching element to mix the high-duty strike based on control of a high duty ratio and the low-duty strike based on control of a low duty ratio in one operation until a finger is released after a trigger is pulled with the finger. Accordingly, it is possible to secure a necessary fastening torque and to effectively prevent a high load from being continuously applied to the motor. As a result, it is possible to employ a high-power motor and to achieve power saving of the motor, thereby improving reliability and lifespan of the impact tool.

According to the configuration of claim 2, since the control means performs control so as to cause the high-duty strike to intermittently appear between the low-duty strikes, it is possible to effectively suppress a temperature rise of the motor. Since a fastening operation using a high-power area of the motor is intermittently performed, it is possible to enhance the fastening torque.

According to the configuration of claim 3, since the control means switches the duty ratio between a high duty ratio and a low duty ratio based on the timing of the strike detected by the strike detecting means, it is possible to satisfactorily change the duty ratio for each strike and thus to realize a fastening operation with high accuracy.

According to the configuration of claim 4, since the strike detecting means detects whether a strike is made by detecting the current value, it is possible to detect a strike using an existing control circuit without adding a new detector and thus to suppress an increase in manufacturing cost for putting the invention into practice.

According to the configuration of claim 5, since the strike detecting means is an acceleration sensor, it is possible to satisfactorily detect a strike timing by only adding an inexpensive impact sensor and thus to realize rotation control of the motor with high accuracy.

According to the configuration of claim 6, since the control means changes the PWM driving signal so as to the high-duty strike to periodically appear once for every two or more times of the low-duty strike, it is possible to satisfactorily complete a fastening operation with a defined torque without causing lack of a fastening torque. It is possible to prevent occurrence of an unusual state such as sudden discontinuous change of the power of the motor during the fastening operation and thus to smoothly control the motor.

According to the configuration of claim 7, since the low duty ratio is equal to or less than 90% of the high duty ratio, it is possible to realize a desired fastening torque and to achieve a decrease in power consumption by 10% or more.

According to the configuration of claim 8, since the low duty ratio ranges from 50% to 80% of the high duty ratio, it is possible to achieve a great decrease in power consumption and thus to greatly extend an operation time using a battery.

The above-mentioned objects, other objects, and novel features of the invention will be apparent from the following description and the accompanying drawings.

### Brief Description of Drawings

Fig. 1 is a longitudinal cross-section illustrating an internal structure of an impact tool according to a first embodiment of the invention.
Figs. 2A and 2B are diagrams illustrating an inverter circuit board 4, where Fig. 2A is a rear view of the impact tool 1 when viewed from the rear side and Fig. 2B is a side view of the impact tool 1 when viewed from a lateral side.
Fig. 3 is a block diagram illustrating a circuit configuration of a driving control system of a motor 3 according to the first embodiment of the invention.
Fig. 4 is a graph illustrating a relationship among a fastening torque, a motor current, and a duty ratio of a PWM driving signal in the impact tool according to the first embodiment.
Fig. 5 is a flowchart illustrating a process flow of setting a duty ratio for motor control when a fastening operation is performed using the impact tool 1 according to the first embodiment.
Fig. 6 is a flowchart illustrating a process flow of setting a duty ratio for motor control when a fastening operation is performed using an impact tool 1 according to a second embodiment of the invention.

### Mode for carrying out the Invention

### First Embodiment

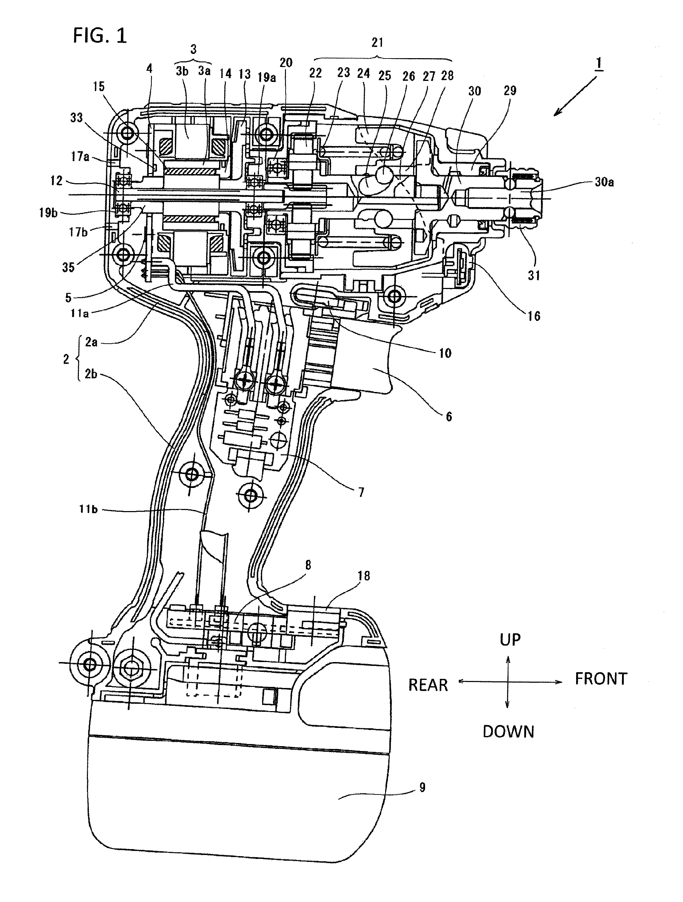

Hereinafter, a first embodiment of the invention will be described with reference to the accompanying drawings. In the following description, directions of up, down, front, and rear are defined as directions indicated by arrows in Fig. 1.

Fig. 1 is a diagram illustrating an internal structure of an impact tool 1 according to the invention. The impact tool 1 drives a rotational striking mechanism 21 using a rechargeable battery 9 as a power source and using a motor 3 as a driving source, applies a rotational force and a striking force to an anvil 30 which is an output shaft, and intermittently transmits a rotational striking force to a tip tool (not illustrated) such as a driver bit held by an attachment hole 30a of a sleeve 31, thereby performing operations such as screw fastening or bolt fastening. A brushless DC type motor 3 is accommodated in a tubular body portion 2a of a housing having a substantially T-like shape in a side view. A rotation shaft 12 of the motor 3 is rotatably supported by a bearing 19a disposed around the center of the body portion 2a of the housing 2 and a bearing 19b disposed close to a rear end thereof, a rotor fan 13 which is attached to be coaxial with the rotation shaft 12 and rotates in synchronization with the motor 3 is disposed on the front side of the motor 3, and an inverter circuit board 4 for driving the motor 3 is disposed on the rear side of the motor 3. An air flow generated by the rotor fan 13 is introduced into the housing 2 from air inlets 17a and 17b and a slot (not illustrated) formed in a housing portion around the inverter circuit board 4, mainly flows between the rotor 3a and the stator 3b, is suctioned from the rear side of the rotor fan 13 and flows in the radial direction of the rotor fan 13, and is discharged from a slot (not illustrated), which is formed in a housing part around the rotor fan 13 and will be described later, to the outside of the housing 2. The inverter circuit board 4 is a double-sided board having substantially the same circular shape as the outer shape of the motor 3, and plural switching elements 5 such as FETs and position detecting elements 33 such as hall ICs are mounted on the board.

Between the rotor 3a and the bearing 19a, a sleeve 14 and the rotor fan 13 are attached to be coaxial with the rotation shaft 12. The rotor 3a forms a magnetic path using a magnet 15 and is formed, for example, by stacking four thin metal plates of a flat panel shape having a slot formed therein. The sleeve 14 is a connection member allowing the rotor fan 13 and the rotor 13a to rotate without idling and is formed of, for example, plastic. A balance-correcting groove (not illustrated) is formed in the outer circumferential portion of the sleeve 14, if necessary. The rotor fan 13 is integrally formed, for example, using a plastic mold, is a so-called centrifugal fan that suctions air from the inner circumference on the rear side and discharges the air in the outward radial direction on the front side thereof, and includes plural blades extending radially from the surrounding of a penetration hole which the rotation shaft 12 penetrates. A plastic spacer 35 is disposed between the rotor 3a and the bearing 19b. The shape of the spacer 35 is substantially cylindrical and defines a gap between the bearing 19b and the rotor 3a. This gap is required for disposing the inverter circuit board 4 (Fig. 1) to be coaxial and for forming a space for a flow channel of an air flow cooling a switching element 5.

A trigger switch 6 is disposed in an upper portion of a handle 2b extending substantially at a right angle integrally from the body portion 2a of the housing 2, and a switch board 7 is disposed below the trigger switch 6. A forward and reverse switching lever 10 for switching the rotation direction of the motor 3 is disposed above the trigger switch 6. A control circuit board 8 for controlling the rotation speed of the motor 3 by pulling the trigger switch 6 is accommodated in a lower portion of the handle 2b. The control circuit board 8 is electrically connected to the battery 9 and the trigger switch 6. The control circuit board 8 is connected to the inverter circuit board 4 via a signal line 11 b. The battery 9 such as a nickel-cadmium battery or a lithium ion battery is detachably attached to below the handle 2b. The battery 9 is a pack of plural secondary batteries such as lithium ion batteries and is charged by detaching the battery 9 from the impact tool 1 and attaching the battery 9 to a dedicated charger (not illustrated) when charging the battery 9.

The rotational striking mechanism 21 includes a planetary gear reduction mechanism 22, a spindle 27, and a hammer 24, the rear end thereof is supported by a bearing 20, and the front end thereof is supported by metal 29. When the trigger switch 6 is pulled to start the motor 3, the motor 3 starts its rotation in a direction set by the forward and reverse switching lever 10, the rotational force thereof is reduced by the planetary gear reduction mechanism 22 and is transmitted to the spindle 27, and the spindle 27 is rotationally driven at a predetermined speed. Here, the spindle 27 and the hammer 24 are connected to each other by a cam mechanism. The cam mechanism includes a V-shaped spindle cam groove 25 formed on the outer circumferential surface of the spindle 27, a hammer cam groove 28 formed on the inner circumferential surface of the hammer 24, and a ball 26 engaging with the cam grooves 25 and 28.

The hammer 24 is elastically impelled to the front side by a spring 23, and is located at a position with a gap from an end face of the anvil 30 by causing the ball 26 and the cam grooves 25 and 28 to engage with each other when the hammer 24 is stopped. Convex portions (not illustrated) are formed to be symmetric at two positions on rotary surfaces, which face each other, of the hammer 24 and the anvil 30. When the spindle 27 is rotationally driven, the rotation is transmitted to the hammer 24 via the cam mechanism and the convex portion of the hammer 24 engages with the convex portion of the anvil 30 to rotate the anvil 30 before the hammer 24 rotates by a half turn. When a relative rotation occurs between the spindle 27 and the hammer 24 by an engaging reaction force at that time, the hammer 24 starts its backward movement to the motor 3 while compressing the spring 23 along the spindle cam groove 25 of the cam mechanism.

When the convex portion of the hammer 24 passes over the convex portion of the anvil 30 by the backward movement of the hammer 24 and release the engagement there between, the hammer 24 is rapidly accelerated in the rotation direction and the forward direction by the elastic energy stored in the spring 23 and an action of the cam mechanism in addition to the rotational force of the spindle 27 and moves forward by the elastic force of the spring 23, the convex portion of the hammer 24 is locked again to the convex portion of the anvil 30, and both start rotation as a unified body. At this time, since a strong rotational striking force is applied to the anvil 30, the rotational striking force is transmitted to a screw via a tip tool (not illustrated) attached to the attachment hole 30a of the anvil 30. Thereafter, the same operation is repeated, the rotational striking force is intermittently repeatedly transmitted from the tip tool to the screw, and thus, for example, the screw is driven into a fastening material (not illustrated) such as timber.

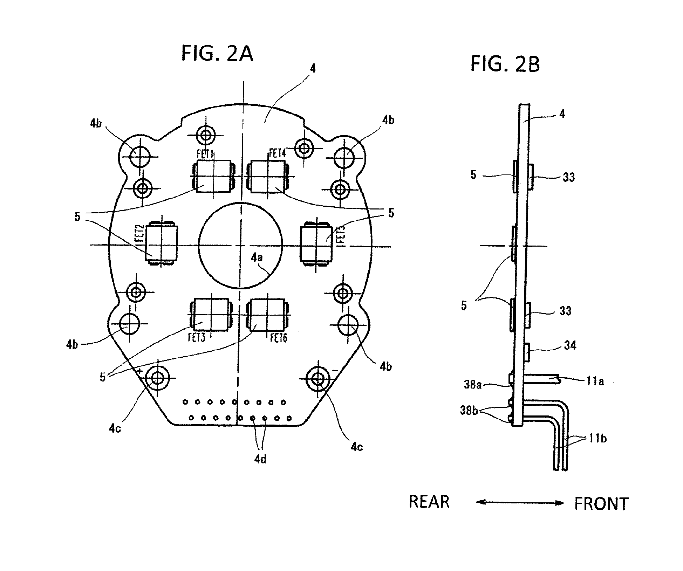

The inverter circuit board 4 according to this embodiment will be described below with reference to Figs. 2A and 2B. Figs. 2A and 2B are diagrams illustrating the inverter circuit board 4, where Fig. 2A is a rear view of the impact tool 1 when viewed from the rear side and Fig. 2B is a side view of the impact tool 1 when viewed from the lateral side. The inverter circuit board 4 is formed of, for example, glass epoxy (which is obtained by hardening glass fiber using an epoxy resin) and has substantially the same circular shape as the outer shape of the motor 3, and a hole 4a through which the spacer 35 passes is formed at the center of the inverter circuit board 4. Four screw holes 4b are formed in a circumference of the inverter circuit board 4 and the inverter circuit board 4 is fixed to the stator 3b by screws passing through the screw holes 4b. Six switching elements 5 are attached to the inverter circuit board 4 so as to surround a hole 4a. In this embodiment, thin FETs are used as the switching elements 5, but FETs having a normal size may be used.

Since the switching element 5 has a very small thickness, the switching element 5 is attached to the inverter circuit board 4 using surface mount technology (SMT) in a state in which the switching element 5 is attached on the board in this embodiment. Although not illustrated, it is preferable that the inverter circuit board 4 be coated with a resin such as silicone so as to cover all the switching elements 5. The inverter circuit board 4 is a double-sided board, and electronic elements such as three position detecting elements 33 (only two are illustrated in Fig. 2B) and a thermistor 34 are mounted on the front surface of the inverter circuit board 4. The inverter circuit board 4 has a shape which slightly protrudes downward from the same circular shape as the motor 3, plural penetration holes 4d are formed in the protruding portion, and signal lines 11b pass through the penetration holes 4d from the front surface side and are fixed on the rear surface side by solders 38b. Similarly, the power supply line 11 a passes through a penetration hole 4c of the inverter circuit board 4 from the front surface side and is fixed to the rear surface side by a solder 38a. The signal lines 11 b and the power supply line 11 a may be fixed to the inverter circuit board 4 via a connector fixed to the board.

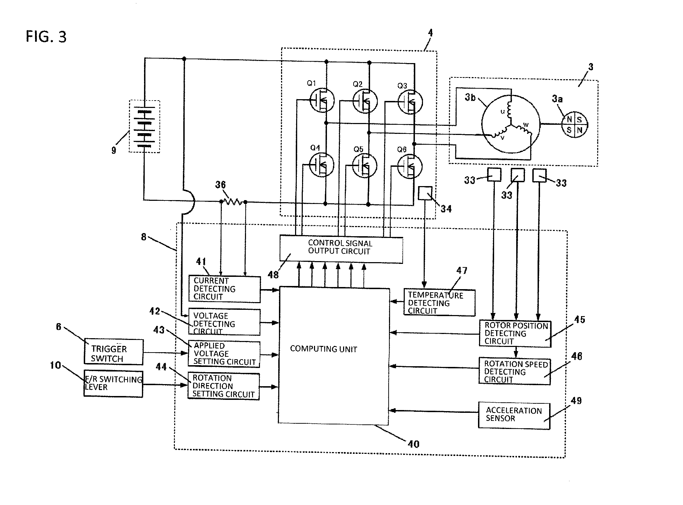

The configuration and operation of a driving control system of the motor 3 will be described below with reference to Fig. 3. Fig. 3 is a block diagram illustrating the configuration of the driving control system of the motor. In this embodiment, the motor 3 includes a three-phase brushless DC motor.

The motor 3 is of a so-called inner rotor type and includes a rotor 3a in which a magnet 15 (permanent magnet) having a pair of N pole and S pole is buried, three position detecting elements 33 which are arranged every 60° so as to detect the rotational position of the rotor 3a, and a stator 3b including three phase windings U, V, and W which are star-connected and which are controlled in a current supply section of an electrical angle of 120° based on position detection signals from the position detecting elements 33. In this embodiment, the position of the rotor 3a is detected in an electromagnetic coupling manner using the position detecting elements 33 such as hall ICs, but a sensor-less method of detecting the position of the rotor 3a by extracting an induced voltage (counter electromotive force) of the armature windings as a logic signal using a filter may be employed.

An inverter circuit mounted on the inverter circuit board 4 includes six FETs (hereinafter, simply referred to as "transistors") Q1 to Q6 which are connected in a three-phase bridge manner and a fly-wheel diode (not illustrated) and is mounted on the inverter circuit board 4. A temperature detecting element (thermistor) 34 is fixed to a position close to the transistors on the inverter circuit board 4. The gates of the six transistors Q1 to Q6 which are bridge-connected are connected to a control signal output circuit 48, and the sources or drains of the six transistors Q1 to Q6 are connected to the armature windings U, V, and W which are star-connected. Accordingly, the six transistors Q1 to Q6 perform a switching operation based on a switching element driving signal output from the control signal output circuit 48, converts a DC voltage of the battery 9 applied to the inverter circuit into three-phase (U-phase, V-phase, and W-phase) AC voltages Vu, Vv, and Vw, and supplies power to the armature windings U, V, and W.

A computing unit 40, a current detecting circuit 41, a voltage detecting circuit 42, an applied voltage setting circuit 43, a rotation direction setting circuit 44, a rotor position detecting circuit 45, a rotation speed detecting circuit 46, a temperature detecting circuit 47, and a control signal output circuit 48 are mounted on the control circuit board 8. Although not illustrated, the computing unit 40 includes a microcomputer having a CPU that outputs a driving signal based on a processing program and data, a ROM that stores programs or control data corresponding to the flowcharts to be described later, a RAM that temporarily stores data, a timer, and the like. The current detecting circuit 41 is a current detector for detecting a current flowing in the motor 3 by measuring a voltage across a shunt resistor 36 and the detected current is input to the computing unit 40. The voltage detecting circuit 42 is a circuit that detects a battery voltage of the battery 9 and the detected voltage is input to the computing unit 40.

The applied voltage setting circuit 43 is a circuit that sets a voltage applied to the motor 3, that is, a duty ratio of a PWM signal, in response to a movement stroke of the trigger switch 6. The rotation direction setting circuit 44 is a circuit that detects an operation of forward rotation or reverse rotation of the motor, which is performed by the forward and reverse switching lever 10, and sets the rotation direction of the motor 3. The rotor position detecting circuit 45 is a circuit that detects a relative position between the rotor 3a and the armature windings U, V, and W of the stator 3b based on the output signals of the three position detecting elements 33. The rotation speed detecting circuit 46 is a circuit that detects the rotation speed of the motor based on the number of detection signals from the rotor position detecting circuit 45, which are counted per unit time. The control signal output circuit 48 supplies a PWM signal to the transistors Q1 to Q6 based on the output of the computing unit 40. The rotation speed of the motor 3 in the set rotation direction can be controlled by adjusting the power to be supplied to the armature windings U, V, and W.

An acceleration sensor 49 detects the magnitude of acceleration due to an impact applied to the anvil 30 and the output thereof is input to the computing unit 40. The computing unit 40 can detect the timing at which a strike is made or the magnitude of a fastening torque by monitoring the output of the acceleration sensor 49, and can determine whether the fastening is completed with a defined torque value. In this way, the strike detecting means is realized by a combination of the acceleration sensor 49 and the computing unit 40, but the acceleration sensor 49 is not essential to perform the control according to this embodiment and thus the acceleration sensor 49 may be not provided. The position to which the acceleration sensor 49 is attached is not particularly limited as long as the position is inside the housing 2. For example, the acceleration sensor 49 may be mounted directly on the control circuit board 8 or the inverter circuit board 4 by soldering or screwing or the acceleration sensor 49 may be fixed to the vicinity of the board by drawing out a wire from the board. The acceleration sensor 49 is, for example, a so-called a piezoelectric acceleration sensor. In this case, the acceleration sensor 49 measures acceleration using a phenomenon (piezoelectric effect) in which a voltage is generated due to a twist of a piezoelectric element (not illustrated) inside the acceleration sensor 49.

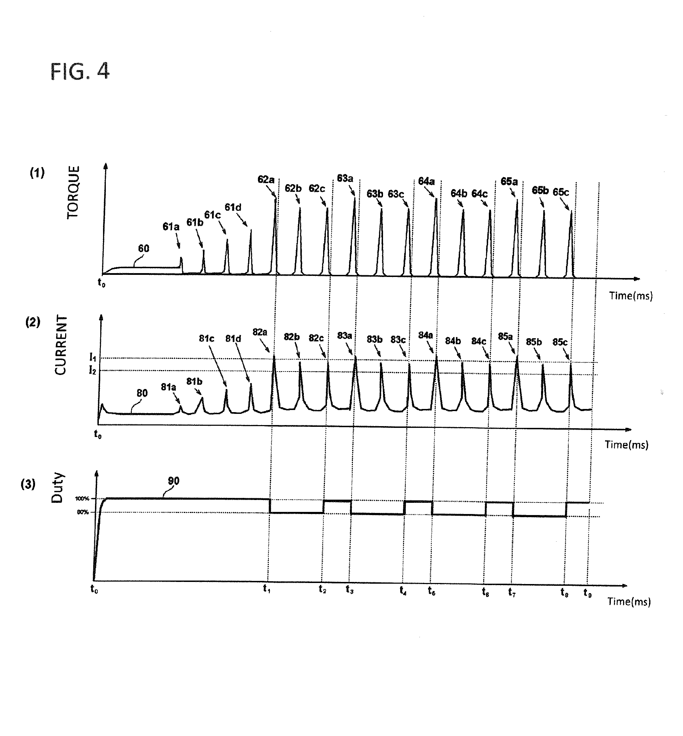

A relationship among the fastening torque, the motor current, and the duty ratio of the PWM driving signal in the impact tool according to this embodiment will be described below with reference to Fig. 4. In the graphs illustrated in (A) to (C) of FIG. 4, the horizontal axes represent time (milliseconds) and the horizontal axes are illustrated to correspond to each other. In this embodiment, in control of performing a high-load operation, for example, a bolt fastening operation with a fastening torque of 100 N·m or more, once using the impact tool 1, an operator pulls the trigger switch 6 at time t0 to start the motor 3, and a predetermined torque 60 is thus generated in the anvil 30. When a bolt is seated, the torque value increases and the convex portion of the hammer 24 passes over the convex portion of the anvil 30 to release the engagement between the convex portion of the hammer 24 and the convex portion of the anvil 30 by the backward movement of the hammer 24. As a result, the hammer 24 strikes the convex portion of the anvil 30 by the elastic energy stored in the spring 23 and an action of the cam mechanism (arrow 61 a). After the strike of the hammer 24, the hammer 24 moves backward by the impact. Accordingly, the load applied to the motor 3 reaches a maximum value immediately thereafter and the current value reaches a peak. Similarly, when strikes indicated arrows 61 b to 61 d are made, a reaction force from the tip tool slowly increases and the current flowing in the motor 3 immediately thereafter increases and exceeds a first threshold value I₁ as indicated by arrow 82a. The first threshold value I₁ is a threshold value for setting the timing at which the duty ratio having been set to a relatively high value is switched to a relatively low value, and the duty ratio is switched from a duty ratio of 100% (high duty ratio) to a duty ratio of 80% (low duty ratio) when the current is greater than the first threshold value I₁, as illustrated in (C) of Fig. 4 in this embodiment. The determination or performing of the switching is controlled by the computing unit 40 which is the control means. In this specification, the driving using a current greater than the first threshold value I₁, that is, the strike driven and generated with the high duty ratio, is referred to as a "high-duty strike."

When plural strikes, for example, two strikes (arrows 62b and 62c), are made with a low duty ratio (duty ratio of 80%), the computing unit 40 switches the duty ratio 90 from 80% (low duty ratio) to 100% (high duty ratio) at time t₂, as illustrated in (C) of Fig. 4. In this specification, the strike driven and generated with a duty ratio lower than the duty ratio of the strike indicated by arrow 62a is referred to as a "low-duty strike." By counting the timing at which the current value exceeds a second threshold value I₂, the computing unit 40 can detect whether two strikes are made as indicated by arrows 62b and 62c. Here, the second threshold value I₂ is a threshold value for detecting generation of a strike with a duty ratio which is equal to or greater than the low-duty ratio. It is possible to detect both the low-duty strike and the high-duty strike by performing determination based on the second threshold value I₂. As the result of detection by the computing unit 40, a subsequent strike (a high-duty strike indicated by arrow 63a at time t₃) is greater than two previous strikes (arrows 62b and 62c). When the strike indicated by arrow 63a is made, the current value exceeds the first threshold value I₁ again and thus the duty ratio 90 is switched again from 100% (high duty ratio) to 80% (low duty ratio) at time t₃. Similarly, when two strikes with the low duty ratio (80%) are made as indicated by arrows 63b and 63c, the duty ratio 90 is switched again to 100% (high duty ratio) at time t₄. Subsequently, the same control of repeating the high-duty strike and the low-duty strike is performed until the operator removes the hand from the trigger switch 6 at time t₉.

As described above, in this embodiment, a strike with the low duty ratio is made one or more times after a strike with the high duty ratio is made, instead of continuously making a strike with the duty ratio of 100%. The reason for periodically or intermittently making the high-duty strike is that the inventors analysis revealed that one or two high-duty strikes causing a peak torque are sufficient for fastening a bolt. When the high-duty strike is continuously made, a load is applied to mechanism parts such as the striking mechanism or the reduction mechanism, which is not desirable for extension of the lifespan of the impact tool. In this embodiment, by intermittently making the high-duty strike generating a maximum torque when a strike is started, it is possible to secure a necessary fastening torque, to save power of the battery, and to extend the lifespan of a product. A period in which the high-duty strike is intermittently inserted may be regular or may be irregular. However, when constant regularity is not provided, the driving sound of the motor 3 is irregular and thus an operator may feel discomfort. Accordingly, the period may be set to a constant period or a slowing-increasing (decreasing) period. In this embodiment, the high duty ratio is set to 100% and the low duty ratio is set to 80%, but these duty ratios may be set to a combination of other duty ratios such as 90% and 70%.

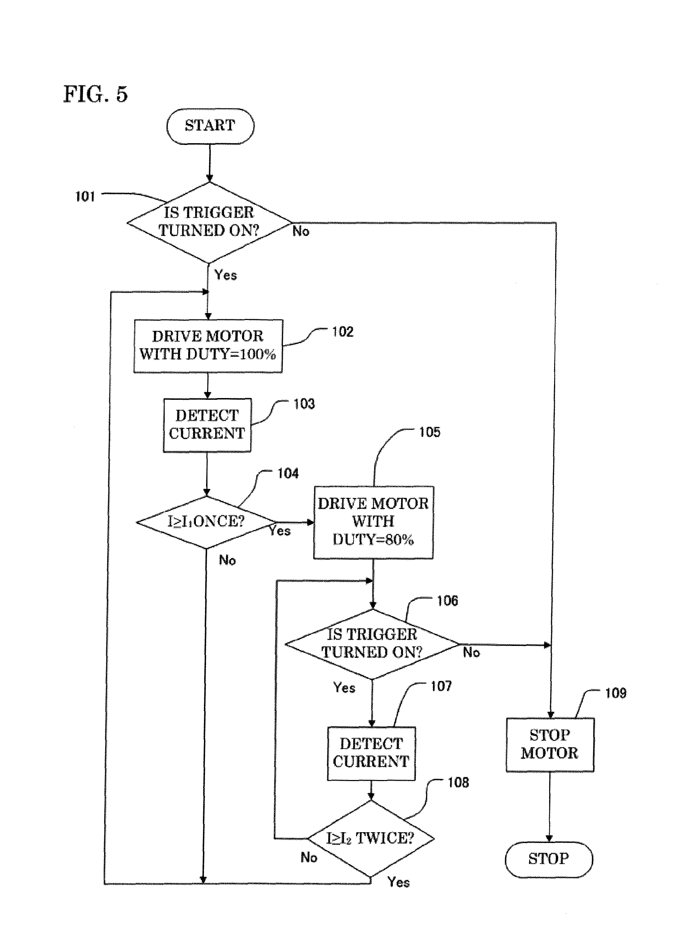

A process flow of setting a duty ratio for motor control when a fastening operation is performed using the impact tool 1 will be described below with reference to the flowchart illustrated in Fig. 5. The control process illustrated in Fig. 5 can be realized by software, for example, by causing the computing unit 40 having a microprocessor to execute a computer program. First, the computing unit 40 detects whether the trigger switch 6 is pulled and turned on by an operator (step 101). When the trigger switch 6 is pulled, the process of step 102 is performed. When it is detected in step 101 that the trigger switch 6 is pulled, the computing unit 40 drives the motor 3 by outputting a control signal to the control signal output circuit 48 so as to set the duty ratio of a PWM signal to 100% (step 102). Then, the computing unit 40 monitors the output of the current detecting circuit 41 when the motor 3 is driven (step 103) and determines whether the current value I is greater than the first threshold value I₁. When the value of a current 80 increases and it is determined that the current value is equal to or greater than the first threshold value I₁, the computing unit 40 drives the motor 3 by outputting a control signal to the control signal output circuit 48 so as to set the duty ratio of a PWM signal to 80% (step 105).

Then, the computing unit 40 determines whether the trigger switch 6 is kept pulled (step 106). When the pulling of the trigger switch 6 is released, that is, when the operator ends the fastening operation, the process flow moves to step 109 and the computing unit 40 stops the motor 3 and ends the process flow. When it is determined in step 106 that the trigger switch 6 is kept pulled, the computing unit 40 monitors the output of the current detecting circuit 41 when the motor 3 is driven (step 107) and determines whether the current value I exceeds the second threshold value I₂ two times (step 108). Here, the setting of two times is made to cause the low-duty strike to appear two times (for example, arrows 62b and 62c) after the high-duty strike (for example, arrow 62a) as illustrated in Fig. 4. In this embodiment, when the high-duty strike is defined as H and the low-duty strike is defined as L, the computing unit 40 performs control such that HLLHLLHLL... appears after time t₁. This appearance pattern is not limited to this example, but may be, for example, HLLLHLLLHLLL... or HLHLHLHL.... The duty ratio is switched between two steps of the high duty ratio and the low duty ratio, but may be switched between about three steps. In this case, an intermediate duty ratio may be set to add an intermediate-duty strike M and the strikes may be regularly repeated like HLMLHLMLHLML.... When it is determined in step 108 that the current value I exceeds the second threshold value I₂ two times, the process flow returns to step 101. Since the high-duty strike and the low-duty strike are mixed by repeating the above-mentioned processes to drive the motor 3, it is possible to greatly improve durability of the motor 3. Since the high-duty strike is made intermittently, it is possible to complete a fastening operation with a defined torque value. It is also possible to reduce the power consumption of the motor 3 and thus to extend the battery lifespan.

### Second Embodiment

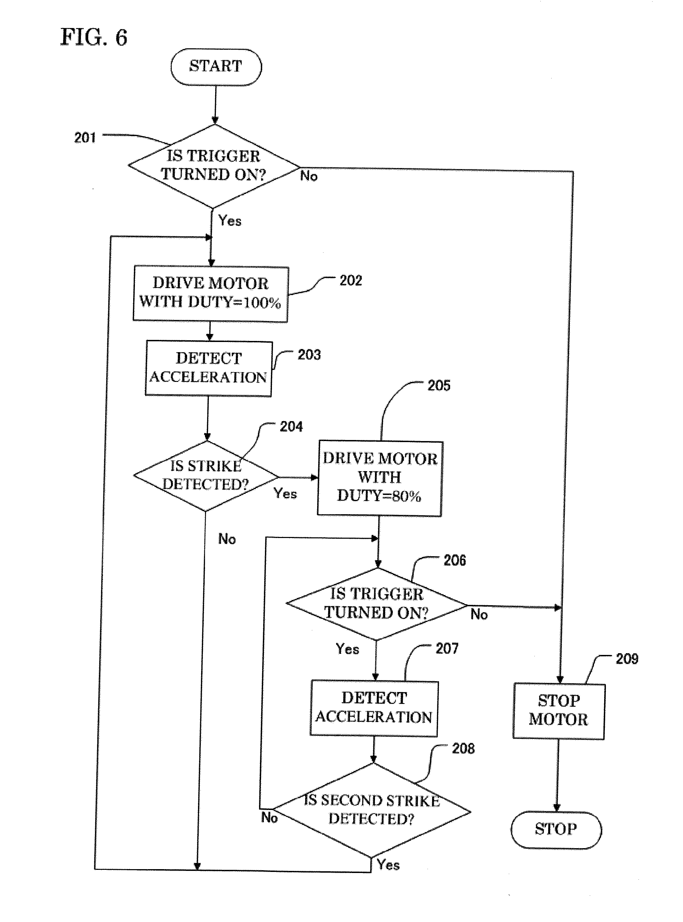

A process flow of setting a duty ratio according to a second embodiment will be described below with reference to the flowchart illustrated in Fig. 6. In the first embodiment, the duty ratio is switched based on the magnitude of the current value flowing in the motor 3. This is because the current value increases due to an increase in load applied from the tip tool at the time of striking and the strike timing is detected by monitoring the current value. On the contrary, in the second embodiment, control is performed using impact detecting means or strike detecting means such as an acceleration sensor 49 (see Fig. 3) mounted on the control circuit board 8 or at an arbitrary position. First, the computing unit 40 detects whether the trigger switch 6 is pulled and is turned on by an operator. When the trigger switch 6 is pulled, the process flow moves to step 202 (step 201). When it is detected in step 201 that the trigger switch 6 is pulled, the computing unit 40 sets the duty ratio of a PWM signal to 100% and drives the motor 3 (step 202). Then, the computing unit 40 monitors the output of the acceleration sensor 49 of the motor 3 (step 203) and determines whether the acceleration sensor 49 detects a predetermined magnitude or more, that is, a strike position (step 204). When the strike position is detected, the computing unit 40 sets the duty ratio to 80% and drives the motor 3 (step 205).

Then, the computing unit 40 determines whether the trigger switch 6 is kept pulled (step 206). When the pulling of the trigger switch 6 is released, the process flow moves to step 209 and the computing unit 40 stops the motor 3 and ends the process flow. When it is determined in step 206 that the trigger switch 6 is kept pulled, the computing unit 40 monitors the output of the acceleration sensor 49 of the motor 3 (step 207) and determines whether the acceleration sensor 49 detects two additional strikes after the detection in step 204 (step 208). Here, when the strike position is detected two times, the process flow returns to step 201. Since the high-duty strike and the low-duty strike are mixed by repeating the above-mentioned processes to drive the motor 3, it is possible to greatly improve durability of the motor 3.

While the invention has been described above based on the embodiments, the invention is not limited to the above-mentioned embodiments but can be modified in various forms without departing from the gist thereof. For example, an example of the impact tool which is driven with a battery has been described in the above-mentioned embodiments, but the invention is not limited to a cordless type impact tool and can be similarly applied to an impact tool using a commercial power supply. The driving power for striking is adjusted by adjusting the duty ratio in the PWM control, but a voltage or/and a current to be applied to the motor at the time of striking may be changed using any method and the impact tool may be driven by performing control so as to intermittently drive a high voltage or/and a large current. In controlling the motor by increasing or decreasing a duty ratio when a strike is made plural times, two or three steps may be set between the high-duty strike and the low-duty strike, four or more steps may be set there between, or the duty ratio may be continuously changed by calculating the duty ratio for each strike using a function expression, for example, of periodically increasing or decreasing the duty ratio.

### Explanation of Sings

- 1: Impact tool
- 2: Housing
- 2a: Body portion
- 3: Motor
- 3a: Rotor
- 3b: Stator
- 4: Inverter circuit board
- 4a, 4b: Hole
- 4c, 4d: Penetration hole
- 5: Switching element
- 6: Trigger switch
- 7: Switch board
- 8: Control circuit board
- 9: Battery
- 10: Forward and reverse switching lever
- 11a: Power supply line
- 11b: Signal line
- 12: Rotation shaft
- 13: Rotor fan
- 14: Sleeve
- 15: Magnet
- 17a: Air inlet
- 19a, 19b, 20: Bearing
- 21: Rotational striking mechanism
- 22: Planetary gear reduction mechanism
- 23: Spring
- 24: Hammer
- 25: Spindle cam groove
- 26: Ball
- 27: Spindle
- 28: Hammer cam groove
- 29: Metal
- 30: Anvil
- 30a: Attachment hole
- 31: Sleeve
- 33: Position detecting element
- 34: Thermistor
- 35: Spacer
- 36: Shunt resistor
- 40: Computing unit
- 41: Current detecting circuit
- 42: Voltage detecting circuit
- 43: Applied voltage setting circuit
- 44: Rotation direction setting circuit
- 45: Rotor position detecting circuit
- 46: Rotation speed detecting circuit
- 47: Temperature detecting circuit
- 48: Control signal output circuit
- 49: Acceleration sensor
- 60: Torque
- 80: Current
- 90: Duty ratio

## Claims

1. An impact tool comprising:
a motor;
control means for controlling driving power supplied to the motor using a semiconductor switching element; and
a striking mechanism that continuously or intermittently drives a tip tool using a rotational force of the motor,
wherein the control means drives the motor by changing a PWM driving signal for driving the semiconductor switching element to mix a high-duty strike based on control of a high duty ratio and a low-duty strike based on control of a low duty ratio in one operation until a trigger is released after the trigger is pulled.

2. The impact tool according to claim 1, wherein the control means causes the high-duty strike to intermittently appear between the low-duty strikes.

3. The impact tool according to claim 2, further comprising strike detecting means for detecting a strike of the striking mechanism,
wherein the control means switches the duty ratio between the high duty ratio and the low duty ratio based on a timing of the detected strike.

4. The impact tool according to claim 3, wherein the strike detecting means detects whether a strike is made by detecting a current value flowing in the motor or the semiconductor switching element.

5. The impact tool according to claim 3, wherein the strike detecting means is an acceleration sensor.

6. The impact tool according to claim 4 or 5, wherein the control means changes the PWM driving signal so as to cause the high-duty strike to appear once for every two or more times in which the low-duty strike appears.

7. The impact tool according to claim 6, wherein the low duty ratio is equal to or less than 90% of the high duty ratio.

8. The impact tool according to claim 7, wherein the low duty ratio ranges from 50% to 80% of the high duty ratio.
